# EUROPÄISCHE PATENTANMELDUNG

(11) **EP 4 375 640 A1**
(43) Veröffentlichungstag der Anmeldung: **29.05.2024**
(21) Anmeldenummer: 22208824.7
(22) Anmeldetag: 22.11.2022
(51) Int. Cl.: G01N 15/06, G08B 17/107, H05B 45/10, H05B 45/50

(54) **VERFAHREN ZUR ÜBERWACHUNG EINER LED**

(71) Anmelder: Wagner Group GmbH, 30853 Langenhagen (DE)
(72) Erfinder: Filippini, Daniel, 30900 Wedemark (DE); Hartwig, Daniel, 30851 Langenhagen (DE)
(74) Vertreter: Götz, Gudrun Veronika

(57) **Zusammenfassung**

Die Erfindung betrifft ein Verfahren zur Überwachung der betriebsdauerabhängigen Lichtintensitätsabnahme eines LED-Chips (110, 120) für eine Partikeldetektionseinheit (200), wobei ein erster LED-Chip (110) und ein zweiter LED-Chip (120) als Leuchtdiode (LED) zum Aussenden von Licht konfiguriert und derart ausgerichtet sind, dass das jeweils ausgesendete Licht einen gemeinsamen Lichtpfad (130) definierend einander zumindest teilweise überlagert, und ein Lichtempfänger (140), insbesondere eine Photodiode (PD) zum direkten oder indirekten Empfangen von zumindest einem Teil des von den LED-Chips (110, 120) ausgesendeten Lichts konfiguriert ist. Es ist die Aufgabe der vorliegenden Erfindung, eine zugleich zuverlässige und kostengünstige Möglichkeit zur Überwachung der betriebsdauerabhängigen Lichtintensitätsabnahme eines LED-Chips für eine Partikeldetektionseinheit zu schaffen. Die Aufgabe wird dadurch gelöst, dass der erste LED-Chip (110) für eine festgelegte, erste Betriebsdauer (t₁) zum Aussenden von Licht betrieben wird, der zweite LED-Chip (120) für eine festgelegte, von der ersten Betriebsdauer (t₁) abweichende zweite Betriebsdauer (t₂) zum Aussenden von Licht betrieben wird, von dem Lichtempfänger (140) das von dem ersten LED-Chip (110) sowie das von dem zweiten LED-Chip (120) ausgesendete Licht zumindest teilweise erfasst und die jeweilige Lichtintensität (I₁, I₂) ermittelt wird, und anhand der Lichtintensitäten (I₁, I₂) die betriebsdauerabhängige Lichtintensitätsabnahme des ersten LED-Chips (110) und/oder des zweiten LED-Chips (120) ermittelt wird.

## Beschreibung

Die Erfindung betrifft ein Verfahren zur Überwachung der betriebsdauerabhängigen Lichtintensitätsabnahme eines LED-Chips für eine Partikeldetektionseinheit. Hierbei sind ein erster LED-Chip und ein zweiter LED-Chip als Leuchtdiode zum Aussenden von Licht konfiguriert und derart ausgerichtet, dass das jeweils ausgesendete Licht des ersten und des zweiten LED-Chips einen gemeinsamen Lichtpfad definierend einander zumindest teilweise überlagert. Ein Lichtempfänger, insbesondere eine Photodiode, ist zum direkten oder indirekten Empfangen von zumindest einem Teil des von den LED-Chips ausgesendeten Lichts konfiguriert. Insbesondere ist der Lichtempfänger auf den gemeinsamen Lichtpfad ausgerichtet.

Die Erfindung betrifft außerdem eine entsprechende Partikeldetektionseinheit zur Überwachung der betriebsdauerabhängigen Lichtintensitätsabnahme eines LED-Chips mit einer Leuchtdiode zum Aussenden von Licht, einem Lichtempfänger, insbesondere einer Photodiode, zum Empfangen von zumindest einem Teil des von der Leuchtdiode ausgesendeten Lichts und einem signalübertragend mit der Leuchtdiode und der Photodiode verbundenen Steuerungsmodul. Die Leuchtdiode und der Lichtempfänger definieren gemeinsam einen Detektionsbereich innerhalb einer Detektionskammer der Partikeldetektionseinheit. Bei einem Durchlichtdetektor ist der Lichtempfänger innerhalb des Lichtpfads der Leuchtdiode und gegenüberliegend zu dieser angeordnet, der Winkel zwischen der optischen Achse der Leuchtdiode und des Lichtempfängers entspricht 0°. Bei einem Streulichtdetektor schließen die optische Achse der Leuchtdiode und des Lichtempfängers einen Winkel größer 0°, den sogenannten Streulichtwirikel ein. Das Steuerungsmodul ist zur Erkennung und Auswertung von im Detektionsbereich befindlichen Partikeln anhand des von dem Lichtempfänger empfangenen Lichts, also entweder anhand des durch die Partikel reduzierten Durchlichts (Durchlichtdetektor) oder aber anhand des an den Partikeln gestreuten Streulichts (Streulichtdetektor) konfiguriert.

Leuchtdioden oder auch lichtemittierende Dioden (LED) sind Dioden, die bei elektrischem Stromfluss Licht ausstrahlen. Ein gängiger Aufbau einer Leuchtdiode umfasst den LED-Chip, die eigentliche Diode, welche elektrischen Strom in einer Richtung, der sogenannten Durchlassrichtung passieren lässt und in der anderen Richtung sperrt. Leuchtdioden sind derart konfiguriert, dass bei Stromfluss durch den LED-Chip in Durchlassrichtung Licht ausgesendet bzw. emittiert wird. Ein weiterer Bestandteil der Leuchtdiode ist das Gehäuse, welches zumeist aus einem transparenten Material wie Kunststoff oder Glas besteht und zur Bündelung bzw. Lenkung des ausgesendeten Lichts entlang einer Rotations- oder Symmetrieachse, auch als optische Achse bezeichnet, dient. Anstelle eines Gehäuses kann aber auch eine Linse zur Bündelung bzw. Lenkung vorgesehen und unmittelbar vor dem LED-Chip angeordnet sein. Das von der Leuchtdiode ausgesendete und entlang der optischen Achse gebündelte Licht definiert einen Lichtpfad und ist vergleichbar bspw. mit dem Lichtkegel einer Taschenlampe. Mittels zweier Anschlüsse lässt sich die Leuchtdiode mit einer Spannungsquelle verbinden.

In physikalischer Betrachtung entspricht das von einer Lichtquelle ausgesendete Licht einer Vielzahl einzelner Lichtstrahlen. Im Sinne dieser Erfindung wird unter dem Begriff "Lichtpfad" daher derjenige Raum oder Bereich verstanden, den die Gesamtheit aller von einer einzelnen Lichtquelle ausgesendeten Lichtstrahlen beansprucht. Der Lichtpfad einer Lichtquelle wird also durch das von der Lichtquelle ausgesendete Licht, und zwar unabhängig vom tatsächlichen Betriebszustand der Lichtquelle, definiert. Anders ausgedrückt ist der Lichtpfad auch vorhanden, sofern die Lichtquelle ausgeschaltet ist, d. h. kein Licht aussendet.

Leuchtdioden können einen oder mehrere LED-Chips im selben Gehäuse aufweisen. Weit verbreitet sind bspw. sogenannte RGB-LEDs, welche insgesamt drei LED-Chips in den Farben Rot, Grün und Blau, in einem gemeinsamen Gehäuse umfassen. Durch Überlagerung des jeweils ausgesendeten Lichts (Rot, Grün bzw. Blau) wird innerhalb des entlang der optischen Achse ausgebildeten, gemeinsamen Lichtpfads durch additive Farbmischung bspw. weißes Licht erzeugt.

Ein "gemeinsamer Lichtpfad" ist im Sinne dieser Erfindung also der Überschneidungsbereich, innerhalb dessen sich die von zwei oder mehr Lichtquellen jeweils ausgesendeten Lichtstrahlen, d. h. deren jeweilige Lichtpfade überlagern.

Neben dem Einsatz als Beleuchtungsmittel oder zur Hintergrundbeleuchtung finden Leuchtdioden auch in spezielleren Anwendungsgebieten, wie der Sensorik, insbesondere der Partikeldetektion mittels Streulicht- oder Durchlichtdetektoren Verwendung. Hierbei bewirken im Lichtpfad der Leuchtdiode befindliche Partikel eine Streuung und/oder Absorption des ausgesendeten Lichts. Anhand des von einem Lichtempfänger, insbesondere einer Photodiode, erfassten Streulicht- oder Durchlichtanteils können Rückschlüsse auf Art und Herkunft der Partikel gezogen werden und so zum Beispiel Brände, deren Entstehung oder andere Gefahrensituationen frühzeitig erkannt werden. Zum Erfassen der jeweiligen Streulicht- oder Durchlichtanteile ist die Photodiode derart konfiguriert, dass bei Lichteinfall ein elektrischer Strom bzw. eine elektrische Spannung erzeugt wird.

Anders als Leuchtdioden senden Photodioden also kein Licht aus, sondern können einfallendes Licht, insbesondere einfallende Lichtstrahlen erfassen. Entsprechend dem Lichtpfad einer Leuchtdiode, welcher durch die Gesamtheit der ausgesendeten Lichtstrahlen definiert wird, wird der sogenannte "Einfallsbereich" einer Photodiode durch die Gesamtheit der von der Photodiode erfassbaren Lichtstrahlen definiert.

Ein entsprechender Aufbau eines Rauchdetektors, der als Streulichtdetektor konzipiert ist, ist zum Beispiel aus der GB 2586283 A bekannt. Der Rauchdetektor umfasst eine Lichtquelle, bspw. eine Leuchtdiode und einen Sensor, bspw. eine Photodiode. Das von der Leuchtdiode ausgesendete Licht wird mittels Lichtleitmitteln in eine Detektionskammer des Rauchdetektors geleitet. Die Photodiode ist auf den Lichtpfad ausgerichtet und legt derart einen Detektionsbereich fest. Sofern sich Rauchpartikel im Detektionsbereich befinden, wird an diesen gestreutes Streulicht von der Photodiode erfasst. Anhand des von der Photodiode ausgegebenen Strom- oder Spannungssignals kann auf einen möglichen Brand rückgeschlossen werden.

Der Lichtempfänger ist derart auf den durch die Lichtquelle definierten Lichtpfad ausgerichtet, dass dessen Einfallsbereich den Lichtpfad schneidet. Der "Detektionsbereich" ist folglich ein Schnittbereich, welcher durch Überlagerung des Lichtpfads der Lichtquelle und des Einfallsbereichs des Lichtempfängers gebildet wird.

Ein anderer Aufbau eines Streulichtrauchmelders mit einer Leuchtdiode, die zwei LED-Chips zum Aussenden von blauem bzw. rotem Licht umfasst, ist in der EP 3 029 646 A1 offenbart. Die beiden LED-Chips sind auf einem gemeinsamen Chipträger derart nebeneinander angeordnet, dass deren jeweilige geometrische Mitte einen gleichen Abstand zur optischen Achse der Leuchtdiode aufweist. Die optische Empfangsachse des Photosensors schließt mit der optischen Achse der Leuchtdiode den Streulichtwinkel ein. Aus der EP 3 985 631 A1 ist ein ähnlicher Aufbau bekannt, bei der sich eine erste und eine zweite Lichtquelle in demselben elektronischen Bauteil, beispielsweise einer zweifarbigen LED befinden.

Gerade bei Streulichtaufbauten hängt die Zuverlässigkeit der Branderkennung zu einem wesentlichen, linearen Anteil von der Lichtintensität der Leuchtdiode ab. Der an Rauchpartikeln gestreute Anteil des Lichts, der Streulichtanteil, welcher überhaupt zum Sensor gelangt, liegt gemäß der GB 2586283 A typischerweise in einem Bereich von lediglich etwa 0,001% der Lichtintensität der Leuchtdiode.

Für die Genauigkeit der Partikeldetektion mittels Leuchtdioden und folglich die Funktionsfähigkeit eines auf der Streu- oder Durchlichterkennung basierenden Branderkennungssystems ist daher die Lichtintensität der Leuchtdiode ausschlaggebend. Die Lichtintensität der Leuchtdiode kann grundsätzlich ebenfalls mit einem Lichtempfänger, bspw. einer Photodiode, überwacht werden. Der Lichtempfänger ist hierzu auf den Lichtpfad der Leuchtdiode ausgerichtet, wobei der Lichtempfänger entweder der Leuchtdiode gegenüberliegend, also innerhalb des Lichtpfads der Leuchtdiode, angeordnet sein kann oder aber so ausgerichtet ist, dass die optische Empfangsachse des Lichtempfängers mit der optischen Achse der Leuchtdiode einen Streulichtwinkel einschließt. In letzterem Fall ist Lichtempfänger dann außerhalb des Streulichtpfads angeordnet. Die Photodiode ist derart konfiguriert, dass einfallendes Licht in einen elektrischen Strom oder eine elektrische Spannung umgewandelt wird. Anhand der Strom- oder Spannungsstärke können Rückschlüsse auf die Lichtintensität des einfallenden Lichts gezogen werden. Problematisch ist hierbei, dass eine verringerte Lichtintensität des von der Photodiode erfassten Lichtanteils unterschiedliche Ursachen haben kann. Beispielsweise können Verschmutzungen, die sich im Laufe des Betriebs im Lichtpfad, insbesondere an der Linse oder am Gehäuse der Leuchtdiode ablagern, zu einer Abnahme des zum Lichtempfänger gelangenden Lichtanteils führen. Ein anderer bekannter Effekt ist, dass LED-Chips von Leuchtdioden "altern". Mit zunehmender Betriebsdauer, also der Dauer, die der LED-Chip tatsächlich Licht aussendet bzw. betrieben wird, nimmt die Intensität des ausgesendeten Lichts ab.

Eine Anordnung, mit der die betriebsdauerabhängige Lichtintensitätsabnahme, d. h. die "Alterung" eines LED-Chips einer Rauchdetektionseinheit, unabhängig von Verschmutzungen im Lichtpfad ermittelt werden soll, ist aus der EP 3 131 077 B1 bekannt. Hierin sind zwei Leuchtdioden optisch miteinander gekoppelt, sodass von einer Leuchtdiode ausgesandtes Licht die jeweils andere Leuchtdiode beleuchtet. Mittels einer Steuereinheit wird eine der Leuchtdioden zum Aussenden von Licht angesteuert, wohingegen die jeweils andere Leuchtdiode in eine Betriebsart als Photodiode, zum Erfassen des ausgesendeten Lichtstroms geschaltet wird. Der durch letztere fließende Photostrom kann als Maß für den emittierten Lichtstrom der angesteuerten Leuchtdiode von der Steuereinheit erfasst werden. Um die "Alterung" der Leuchtdiode unabhängig von etwaigen Verschmutzungen messen zu können, ist die optische Kopplung der beiden Leuchtdioden staubdicht ausgeführt. Hierzu wird vorgeschlagen, die beiden Leuchtdioden entweder über einen Lichtleiter miteinander zu verbinden. Alternativ sollen zwei Leuchtdioden zueinander benachbart angeordnet werden, sodass diese "mehr oder weniger" die gleiche optische Achse aufweisen, wobei die optischen Achsen der Leuchtdioden parallel und in einem Abstand von wenigen Millimetern zueinander verlaufen. Zur optischen Kopplung soll zwischen den LED-Gehäusen ein transparenter Klebstoff, Silikon oder Wachs eingebracht werden. Nachteilig ist an diesem Aufbau, dass der Wirkungsgrad einer als Photodiode betriebenen Leuchtdiode im Vergleich zu speziell zu Detektionszwecken entwickelten Photodioden erheblich schlechter ist, was sich wiederum nachteilig auf die Genauigkeit der Erfassung der Lichtintensität auswirkt.

Ein anderer Aufbau, bei dem der Grad der Abnahme eines Photostroms einer Leuchtdiode durch Ermittlung der Differenz zwischen einem Nennstromwert für den Photostrom und einem aktuellen Ist-Stromwert des Photostroms erfolgen soll, ist in der EP 3 131 073 A1 offenbart. Demnach wird der emittierte Lichtstrom einer zum Leuchten angesteuerten Leuchtdiode unmittelbar von einem Photosensor überwacht. Indem der LED-Chip und der Photosensor in ein gemeinsames LED-Gehäuse integriert werden, soll eine direkte optische Kopplung des LED-Chips mit dem Photosensor erreicht werden, ohne dass Verschmutzungspartikel in den optischen Kopplungspfad gelangen können. Der vorgeschlagene Aufbau ist kompliziert. Leuchtdioden mit in das LED-Gehäuse integriertem Photosensor sind unüblich und nicht oder nur selten als Standardprodukte erhältlich, was zu erhöhten Kosten führt.

Es ist die Aufgabe der vorliegenden Erfindung, die Nachteile aus dem Stand der Technik zu eliminieren und eine zugleich zuverlässige und kostengünstige Möglichkeit zur Überwachung der betriebsdauerabhängigen Lichtintensitätsabnahme eines LED-Chips für eine Partikeldetektionseinheit zu schaffen, welche ermöglicht, die Abnahme der Lichtintensität unabhängig von Verschmutzungen der Partikeldetektionseinheit zu überwachen.

Die Aufgabe wird gelöst durch ein Verfahren zur Überwachung der betriebsdauerabhängigen Lichtintensitätsabnahme eines LED-Chips für eine Partikeldetektionseinheit gemäß Anspruch 1 und eine Partikeldetektionseinheit gemäß Anspruch 10.

Ein erfindungsgemäßes Verfahren zur Überwachung der betriebsdauerabhängigen Lichtintensitätsabnahme eines LED-Chips für eine Partikeldetektionseinheit der eingangs näher beschriebenen Art kennzeichnet sich dadurch, dass der erste LED-Chip für eine festgelegte, erste Betriebsdauer und der zweite LED-Chip für eine festgelegte, zweite Betriebsdauer zum Aussenden von Licht betrieben wird.

Partikeldetektionseinheiten werden oftmals zur kontinuierlichen Überwachung von Gebäuden auf Gefahrensituationen wie bspw. Brände oder eine Brandentstehung über längere Zeiträume von bis zu mehreren Jahren hinweg eingesetzt. Zur Detektion von Partikeln kann ein LED-Chip zum Aussenden von Licht, in einem Partikeldetektionsmodus betrieben werden. Bei einem durchgängigen Betrieb, wenn also der LED-Chip dauerhaft Licht aussendet, entspräche die Betriebsdauer dem gesamten Zeitraum, d. h. 24 Stunden pro Tag. In der Praxis ist es zur Einsparung von Energie aber üblich, LED-Chips im Partikeldetektionsmodus gepulst zu betreiben, wobei die Lichtpulse in regelmäßigen oder unregelmäßigen Intervallen erfolgen und jeweils nur wenige Millisekunden lang sein können. In diesem Fall setzt sich die Betriebsdauer aus der Gesamtheit der Länge der Lichtpulse zusammen und kann bspw. zwischen wenigen Minuten bis zu einigen Stunden pro Tag festgelegt werden. In Abhängigkeit von der Betriebsdauer, während der der LED-Chip Licht aussendet, nimmt dessen Lichtintensität ab, auch als betriebsbedingte "Alterung" bezeichnet.

Erfindungsgemäß ist daher vorgesehen, dass ein zweiter LED-Chip für eine ebenfalls festgelegte, jedoch von der ersten Betriebsdauer abweichende zweite Betriebsdauer zum Aussenden von Licht in einem Überwachungsmodus betrieben wird. Der Lichtempfänger erfasst das von dem ersten LED-Chip sowie das von dem zweiten LED-Chip ausgesendete Licht zumindest teilweise. Anhand des jeweils erfassten Licht(-anteils) kann die jeweilige Lichtintensität des ersten und des zweiten LED-Chips ermittelt werden. Anhand der jeweiligen Lichtintensitäten lässt sich dann wiederum die betriebsdauerabhängige Lichtintensitätsabnahme des ersten LED-Chips und/oder des zweiten LED-Chips ermitteln. Hierbei kann die Lichtintensität des zweiten LED-Chips als Referenz für die betriebsdauerabhängige Lichtintensitätsabnahme des ersten LED-Chips herangezogen werden und umgekehrt.

Vorzugsweise wird entweder die erste oder die zweite Betriebsdauer derart kurz, bspw. auf einen Zeitraum von wenigen Sekunden bis wenige Millisekunden pro Tag festgelegt, dass der entsprechende LED-Chip keiner oder lediglich einer vernachlässigbaren betriebsdauerabhängigen Lichtintensitätsabnahme bzw. Alterung unterliegt.

Anders als im Stand der Technik findet durch Überwachung eines der LED-Chips also eine mittelbare Überwachung des jeweils anderen LED-Chips statt. Dadurch, dass die jeweiligen Lichtpfade sowohl des ersten als auch des zweiten LED-Chips einander überlagernd entlang eines gemeinsamen Lichtpfads verlaufen, können Störgrößen, wie Verschmutzungen, die eine nicht alterungs- bzw. nicht betriebsdauerabhängige Veränderung der Lichtintensität zur Folge haben, eliminiert werden. Durch Überlagerung der jeweiligen Wege entlang derer einzelne Lichtstrahlen des ersten Led-Chips und des zweiten LED-Chips bis zum Lichtempfänger verlaufen, können nämlich grundsätzlich identische Umgebungsbedingungen für den Verlauf der Lichtstrahlen des ersten LED-Chips und des zweiten LED-Chips geschaffen werden. Hierdurch lassen sich erfasste Abweichungen der jeweiligen Lichtintensität (allein) auf die betriebsdauerabhängige Alterung zurückführen. Je größer der Überschneidungsbereich, also der gemeinsame Lichtpfad, auf desto mehr Lichtstrahlen bzw. einen umso höheren Anteil des von den LED-Chips ausgesendeten Lichts trifft dies zu. Beispielsweise liegt die Überlagerung des vom ersten LED-Chip und des vom zweiten LED-Chip jeweils ausgesendeten Lichts bei mindestens 50%, vorzugsweise in einem Bereich zwischen 80 bis 100%, insbesondere 90 bis 100% und besonders bevorzugt zwischen 95 bis 100%.

Der Weg einzelner Lichtstrahlen vom ersten bzw. vom zweiten LED-Chip bis zum Lichtempfänger kann direkt oder indirekt verlaufen. Ein direkter Verlauf lässt sich beispielsweise realisieren, indem der Lichtempfänger gegenüberliegend zu den LED-Chips angeordnet ist. Alternativ kann der Weg aber auch indirekt verlaufen, wobei entlang des gemeinsamen Lichtpfads verlaufende Lichtstrahlen bspw. an Partikeln, die sich innerhalb des gemeinsamen Lichtpfads befinden gestreut und/oder reflektiert werden. Der Lichtempfänger ist dann derart ausgerichtet, dass dessen optische Achse einen Streulichtwinkel mit der optischen Achse der LED-Chips einschließt. Der vom Lichtempfänger erfasste Lichtanteil entspricht in diesem Fall einem Streulichtanteil.

Neben der Streuung und/oder Reflexion an Partikeln können die entlang des gemeinsamen Lichtpfads verlaufenden Lichtstrahlen aber auch an anderen Objekten wie bspw. Bauteilen oder optischen Komponenten gestreut und/oder reflektiert werden. Der Anteil des von den LED-Chips gesendeten und an Objekten gestreuten Lichts ist in der Regel sehr gering, kann aber ebenfalls vom Lichtempfänger erfasst werden und wird als Hintergrundstreulichtanteil bezeichnet.

Zur Bestimmung der jeweiligen Lichtintensitätsabnahme können die ermittelten Lichtintensitäten des ersten und des zweiten LED-Chips zueinander in Relation gesetzt werden. Zum Beispiel kann die Differenz der beiden Lichtintensitäten zur Analyse herangezogen werden. Darüber hinaus kann die Bestimmung bspw. auch durch Bildung eines Verhältnisses erfolgen. Die betriebsdauerabhängige Lichtintensitätsabnahme ist proportional dazu. Eine Abnahme der jeweiligen Lichtintensität des ersten oder des zweiten LED-Chips zueinander ist dann zwangsläufig auf die Betriebsdauer, d.h. auf einen Alterungseffekt zurückzuführen.

Das erfindungsgemäße Verfahren kann beispielhaft zur Überwachung eines LED-Chips einer Partikeldetektionseinheit, die zur Branderkennung genutzt wird verwendet werden.

Vorteilhafte Ausführungsformen sind in den abhängigen Ansprüchen beansprucht und werden nachfolgend näher erläutert.

So kann nach einer Erfindungsvariante anhand der ermittelten, betriebsdauerabhängigen Lichtintensitätsabnahme des ersten LED-Chips und/oder des zweiten LED-Chips die Funktionsfähigkeit der Partikeldetektionseinheit bewertet werden.

Hierzu kann bspw. ein Vergleich der für den ersten und den zweiten LED-Chip ermittelten Lichtintensität mit jeweiligen Anfangs-Lichtintensitäten erfolgen. Die Anfangs-Lichtintensität entspricht der ursprünglichen Lichtintensität eines LED-Chips, bevor dieser in Betrieb genommen wurde. Insbesondere erfolgt der Vergleich anhand jeweils gebildeter Relationen der Anfangs-Lichtintensitäten des ersten und des zweiten LED-Chips zueinander sowie der ermittelten Lichtintensitäten des ersten und des zweiten LED-Chips zueinander.

Grundsätzlich ist es denkbar, LED-Chips mit bekannter Anfangs-Lichtintensität zu verwenden, diese kann bspw. vom Hersteller gemessen und angegeben werden. Derartige LED-Chips sind aber vergleichsweise teuer, weshalb es sich in Weiterbildung der Erfindungsvariante als vorteilhaft erwiesen hat, die Anfangs-Lichtintensität jeweils des ersten und des zweiten LED-Chips, und insbesondere deren Relation zueinander durch einen Kalibrierungsprozess zu ermitteln.

Zum Beispiel kann zur Bewertung der Funktionsfähigkeit der Partikeldetektionseinheit eine Relation, bspw. ein Verhältnis der betriebsdauerabhängigen Lichtintensitätsabnahme des ersten und des zweiten LED-Chips zueinander gebildet und mit der Relation, bspw. dem Verhältnis der jeweiligen Anfangs-Lichtintensitäten zueinander verglichen werden.

Anhand der Bewertung können dann entsprechende Maßnahmen umgesetzt werden. So kann bspw. anhand der betriebsdauerabhängigen Lichtintensitätsabnahme eine, insbesondere rechnerische Alterungskompensation zur Auswertung des Streulichtsignals erfolgen. Eine Abnahme der betriebsdauerabhängigen Lichtintensität um einen vorab festgelegten Wert, bspw. in einem Bereich zwischen 30% - 50 % kann als sogenannter "Alterungsfall" bewertet und ein entsprechendes Warnsignal ausgegeben werden.

Bei einem vorteilhaften Ausführungsbeispiel der Erfindung wird der erste LED-Chip zur Partikeldetektion verwendet und der zweite LED-Chip zur Überwachung der betriebsdauerabhängigen Lichtintensitätsabnahme des ersten LED-Chips.

Die erste Betriebsdauer des ersten LED-Chips entspricht hierbei einem Vielfachen der zweiten Betriebsdauer des zweiten LED-Chips.

Der erste LED-Chip wird dann im Partikeldetektionsmodus betrieben und der zweite LED-Chip im Überwachungsmodus. Durch eine gegenüber dem ersten LED-Chip wesentlich geringere Betriebsdauer unterliegt der zweite LED-Chip einer erheblich geringeren Alterung bzw. betriebsdauerabhängigen Lichtintensitätsabnahme. Vorzugsweise wird das Verhältnis der jeweiligen Betriebsdauern zueinander derart gewählt, dass die Lichtintensität des zweiten LED-Chips über dessen Betriebsdauer konstant bleibt oder annähernd als konstant angenommen werden kann. Als günstig hat sich bspw. herausgestellt, dass die Betriebsdauer des ersten LED-Chips in einem Bereich zwischen dem 150-fachen und dem 72000-fachen der Betriebsdauer des zweiten LED-Chips liegt.

In Weiterbildung dieses Beispiels ist es besonders vorteilhaft, nachdem ein vorab festgelegter Wert der betriebsdauerabhängigen Lichtintensitätsabnahme, des ersten LED-Chips erreicht oder überschritten wurde, den ersten und den zweiten LED-Chip derart umgekehrt zu betreiben, dass die zweite Betriebsdauer des zweiten LED-Chips einem Vielfachen der ersten Betriebsdauer des ersten LED-Chips entspricht.

Der für die Umkehr der Betriebsmodi ausschlaggebende Wert kann bspw. Relation zu den Anfangs-Lichtintensitäten festgelegt werden. Nachdem die betriebsdauerabhängige Lichtintensitätsabnahme also zum Beispiel einen Wert von 40% erreicht, werden die Betriebsmodi umgekehrt, d.h. der der zweite LED-Chip wird zur Partikeldetektion im Partikeldetektionsmodus mit der vorherigen Betriebsdauer des ersten LED-Chips betrieben und der erste LED-Chip zur Überwachung im Überwachungsmodus mit der vorherigen Betriebsdauer des zweiten LED-Chips. Durch die Möglichkeit die Betriebsmodi der LED-Chips umzukehren, kann die Lebenszeit der Partikeldetektionseinheit verlängert, bestenfalls verdoppelt werden, gleichzeitig wird eine Redundanz zur Vorbeugung eines Ausfalls geschaffen.

Nach einer vorteilhaften Erfindungsausführung wird die betriebsdauerabhängige Lichtintensitätsabnahme mehrerer erster LED-Chips durch mindestens einen zweiten LED-Chip überwacht. Sofern eine Kalibrierung durchgeführt wird, bei der die jeweiligen Anfangs-Lichtintensitäten aller LED-Chips ermittelt werden, hat es sich als vorteilhaft erwiesen, jeweilige Relationen der Anfangs-Lichtintensitäten der ersten LED-Chips zur Anfangs-Lichtintensität des zweiten LED-Chips zu bestimmen.

Vorzugsweise werden der erste und der zweite LED-Chip nie gleichzeitig, sondern alternierend, d. h. zu voneinander abweichenden Zeiten bzw. Zeiträumen zum Aussenden von Licht betrieben. Hierdurch kann sichergestellt werden, dass, gerade bei Verwendung lediglich eines einzigen Lichtempfängers, dieser ausschließlich Licht entweder des ersten oder des zweiten LED-Chips erfasst. Dies ermöglicht eine höhere Genauigkeit bei der Bestimmung der jeweiligen Lichtintensität. Ferner können beide LED-Chips durch einen einzigen, gemeinsamen Kondensator mit Energie versorgt werden, wodurch Bauraum eingespart und Kosten gesenkt werden.

Vorzugsweise sind der erste bzw. die mehreren ersten und der zweite LED-Chip typengleich und zum Aussenden von Licht derselben Wellenlänge konfiguriert.

Nach einer Verfahrensvariante ist es aber auch denkbar, dass die mehreren ersten LED-Chips jeweils Licht mit voneinander abweichender Wellenlänge, insbesondere rotes, infrarotes, grünes oder blaues Licht aussenden und der mindestens eine zweite LED-Chip Licht mit derselben Wellenlänge eines der ersten LED-Chips, insbesondere blaues Licht, aussendet.

Schließlich sind nach einer Ausgestaltung des Verfahrens der eine oder mehrere erste LED-Chips sowie der zweite LED-Chip und der Lichtempfänger signalübertragend mit einem Steuerungsmodul verbunden. Das Steuerungsmodul steuert den einen oder mehrere erste LED-Chips sowie den zweiten LED-Chip an, ermittelt anhand des von dem Lichtempfänger erfassten Lichts die jeweiligen Lichtintensitäten des ersten und des zweiten LED-Chips und bestimmt anhand der Lichtintensitäten die betriebsdauerabhängige Lichtintensitätsabnahme.

Ein solches Steuerungsmodul kann Bestandteil einer erfindungsgemäßen Partikeldetektionseinheit sein.

Eine Partikeldetektionseinheit der eingangs näher beschriebenen Art, die zur Durchführung des Überwachungsverfahrens nach einer oder mehreren der zuvor beschriebenen Varianten geeignet ist, weist einen ersten LED-Chip zum Aussenden von Licht entlang eines Lichtpfads, einen Lichtempfänger zum Erfassen von zumindest einem Teil des von dem ersten LED-Chip ausgesendeten Lichts und ein Steuerungsmodul auf. Das Steuerungsmodul ist signalübertragend mit dem ersten LED-Chip und dem Lichtempfänger verbunden. Der Lichtempfänger ist einen Detektionsbereich innerhalb einer Detektionskammer der Partikeldetektionseinheit definierend auf den Lichtpfad ausgerichtet. Das Steuerungsmodul ist zur Erkennung und Auswertung von im Detektionsbereich befindlichen Partikeln anhand des von dem Lichtempfänger empfangenen Lichts konfiguriert.

Erfindungsgemäß zeichnet sich die Partikeldetektionseinheit dadurch aus, dass ein zweiter LED-Chip signalübertragend mit dem Steuerungsmodul verbunden ist. Der erste und der zweite LED-Chip sind zum Aussenden von Licht konfiguriert und derart ausgerichtet, dass das jeweils ausgesendete Licht einen gemeinsamen Lichtpfad innerhalb der Detektionskammer definierend einander zumindest teilweise überlagert. Der Lichtempfänger ist, den Detektionsbereich definierend, auf den gemeinsamen Lichtpfad ausgerichtet.

Vorzugsweise ist der Lichtempfänger derart auf den gemeinsamen Lichtpfad der LED-Chips ausgerichtet, dass dessen Einfallsbereich den gemeinsamen Lichtpfad schneidet. Der Detektionsbereich ist dann der Schnittbereich, welcher durch Überlagerung des gemeinsamen Lichtpfads und des Einfallsbereichs des Lichtempfängers gebildet wird. Der erste und der zweite LED-Chip können optional Bestandteil einer gemeinsamen Leuchtdiode (LED) sein.

In vorteilhafter Weiterbildung kann das Steuerungsmodul dazu ausgebildet sein,
- den ersten LED-Chip zum Aussenden von Licht für eine erste Betriebsdauer anzusteuern,
- den zweiten LED-Chip zum Aussenden von Licht für eine, von der ersten Betriebsdauer abweichende zweite Betriebsdauer anzusteuern,
- anhand des von dem Lichtempfänger erfassten Lichts jeweilige Lichtintensitäten des ersten und des zweiten LED-Chips zu ermitteln, und
- anhand der Lichtintensitäten die betriebsdauerabhängige Lichtintensitätsabnahme des ersten LED-Chips und/oder des zweiten LED-Chips zu ermitteln.

Die erfindungsgemäße Partikeldetektionseinheit eignet sich insbesondere zur Erkennung von Bränden oder einer Brandentstehung. Vorzugsweise wird entweder der erste oder der zweite LED-Chip in einem Überwachungsmodus betrieben, und der jeweils andere LED-Chip zur Detektion von Partikeln, insbesondere Rauchpartikeln oder Aerosolen in einem Partikeldetektionsmodus. Die Betriebsdauer des im Überwachungsmodus betriebenen LED-Chips kann vorteilhaft so gewählt werden, dass der entsprechende LED-Chip keiner oder lediglich einer vernachlässigbaren betriebsdauerabhängigen Lichtintensitätsabnahme unterliegt, und so als Referenz für die betriebsdauerabhängige Lichtintensitätsabnahme eines im Partikeldetektionsmodus betriebenen LED-Chips herangezogen werden kann. Der jeweils andere LED-Chip wird dann mit einer wesentlich höheren Betriebsdauer zur Partikeldetektion im Partikeldetektionsmodus betrieben. Durch einen Vergleich der jeweiligen Lichtintensitäten lässt sich folglich die betriebsdauerabhängige Lichtintensitätsabnahme des im Partikeldetektionsmodus betriebenen LED-Chips unabhängig von äußeren Faktoren oder Störgrößen wie Verschmutzungen der Detektionskammer ermitteln.

Ferner kann nach einer Erfindungsausgestaltung das Steuerungsmodul eine Speichereinheit zum Speichern jeweils ermittelter Lichtintensitäten umfassen, wobei eine jeweilige Anfangs-Lichtintensität des ersten und des zweiten LED-Chips bereits auf der Speichereinheit hinterlegt sein kann. Alternativ können jeweilige Anfangs-Lichtintensitäten in einem Kalibrierungsprozess, welcher im Vorfeld des Überwachungsverfahrens durchgeführt wird, ermittelt und auf der Speichereinheit hinterlegt werden. Besonders vorteilhaft ist eine Relation der jeweiligen Anfangs-Lichtintensitäten zueinander, bspw. das Verhältnis der Anfangs-Lichtintensität des ersten LED-Chips zur Anfangs-Lichtintensität des zweiten LED-Chips auf der Speichereinheit als Referenzwert hinterlegt.

Damit sich das jeweils ausgesendete Licht des ersten und des zweiten LED-Chips nahezu vollständig, zur Bildung eines gemeinsamen Lichtpfads überlagert, sind nach vorteilhafter Bauweise der Partikeldetektionseinheit der erste und der zweite LED-Chip unmittelbar zueinander benachbart auf einer gemeinsamen Grundplatte, insbesondere Leiterplatte angeordnet. Das jeweils ausgesendete Licht wird mittels einer Linse entlang einer gemeinsamen optischen Achse gerichtet und/oder gebündelt. Vorzugsweise wird eine einzige, gemeinsame Linse für beide LED-Chips und zur Festlegung der gemeinsamen optischen Achse verwendet. Die Linse ist bspw. unmittelbar vor den LED-Chips angeordnet, sodass der Ursprung der gemeinsamen optischen Achse jeweils im selben Abstand zwischen den beiden LED-Chips liegt.

Zur Einsparung von Bauraum und Kosten ist es nach einer Ausführungsform möglich, dass der erste und der zweite LED-Chip mit einer gemeinsamen Strom- und/oder Spannungsquelle energieleitend verbunden sind. Vorzugsweise kann als Strom- und/oder Spannungsquelle ein einziger, gemeinsamer Kondensator für beide LED-Chips verwendet werden.

Nach einer anderen, vorteilhaften Ausführungsform ist die Partikeldetektionseinheit als Streulichtdetektor konzipiert. Der Lichtempfänger ist dann zum indirekten Empfangen eines Teils des von den LED-Chips ausgesendeten Lichts außerhalb des gemeinsamen Lichtpfads angeordnet und auf diesen ausgerichtet. Die gemeinsame optische Achse der beiden LED-Chips und die optische Achse des Lichtempfängers schließen dann einen Streulichtwinkel ein. Der Streulichtwinkel entspricht einem Winkel, in welchem das von der Lichtquelle, insbesondere dem im Partikeldetektionsmodus betriebenen LED-Chip ausgesendete Licht an im Detektionsbereich vorhandenen Partikeln, insbesondere Rauchpartikeln oder Aerosolen gestreut wird. Vom Lichtempfänger wird dann dieser Streulichtanteil empfangen.

Eine Überwachung der Lichtintensitätsabnahme kann und insbesondere soll aber auch dann erfolgen, sofern sich keine Partikel, wie Rauchpartikel oder Aerosole im Detektionsbereich befinden. Die Sensibilität des Lichtempfängers ist daher, gerade auch bei Streulichtdetektoren, ausreichend hoch zu wählen, sodass bereits das im Innern der Detektionskammer der Partikeldetektionseinheit, z. B. an den Kammerinnenwandungen oder sonstigen Bauteilen gestreute und/oder reflektierte Licht, welches in den Einfallsbereich des Lichtempfängers gelangt, zur Bestimmung der Lichtintensitäten genügt. Dieser, vom Lichtempfänger indirekt erfasste Anteil des ausgesendeten Lichts wird als Hintergreundstreulichtanteil bezeichnet.

Schließlich kann die Partikeldetektionseinheit nach einer vorteilhaften Erfindungsvariante Bestandteil eines Ansaugpartikelerkennungssystems sein. Ein Ansaugpartikelerkennungssystem umfasst mindestens eine Rohr- und/oder Schlauchleitung, die über eine oder mehrere Ansaugöffnungen zur jeweiligen Entnahme einer Fluidprobe in einen oder mehrere Überwachungsbereiche mündet. Die Partikeldetektionseinheit ist dann derart in das Ansaugpartikelerkennungssystem integriert, dass der gemeinsame Lichtpfad auf einen von den Fluidproben durchströmbaren Strömungspfad gerichtet ist.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: eine schematische Darstellung einer beispielhaften Ausführungsform einer erfindungsgemäßen Partikeldetektionseinheit mit einer Streulichtanordnung,
- Fig. 2: eine tabellarische Darstellung beispielhafter Werte für den Betrieb des ersten und des zweiten LED-Chips,
- Fig. 3: eine schematische Darstellung eines ersten Beispiels für die jeweilige Betriebsdauer des ersten und des zweiten LED-Chips,
- Fig. 4: eine schematische Darstellung eines zweiten Beispiels für die jeweilige Betriebsdauer des ersten und des zweiten LED-Chips
- Fig. 5: ein Ablaufschema eines optionalen Kalibrierungsprozesses zur Ermittlung jeweiliger Anfangs-Lichtintensitäten der LED-Chips,
- Fig. 6: ein Ablaufschema einer ersten beispielhaften Variante eines erfindungsgemäßen Verfahrensablaufs,
- Fig. 7: ein Ablaufschema einer zweiten beispielhaften Variante eines erfindungsgemäßen Verfahrensablaufs und
- Fig. 8: ein Ansaugpartikelerkennungssystem mit integrierter Partikeldetektionseinheit.

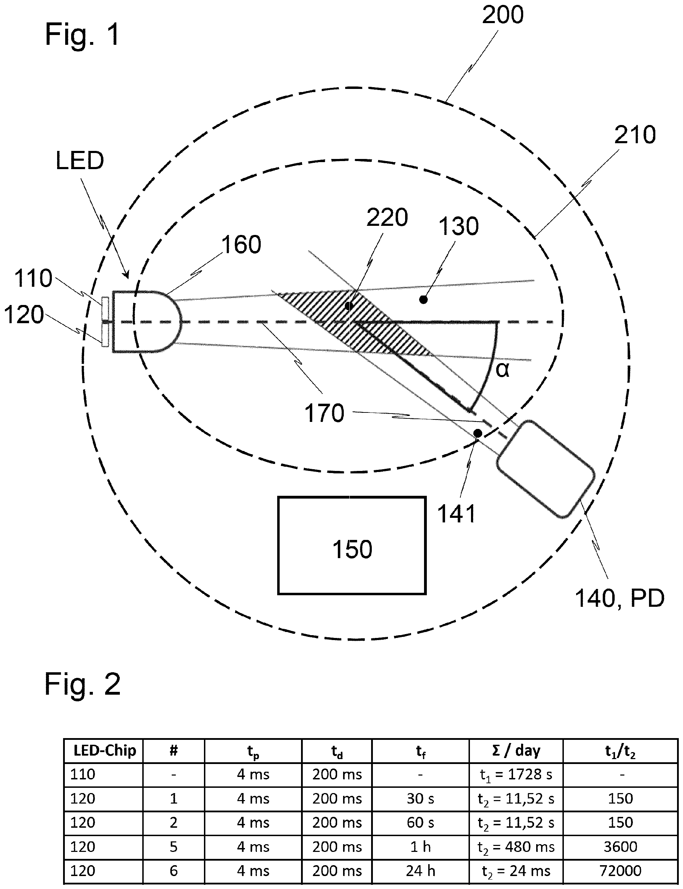

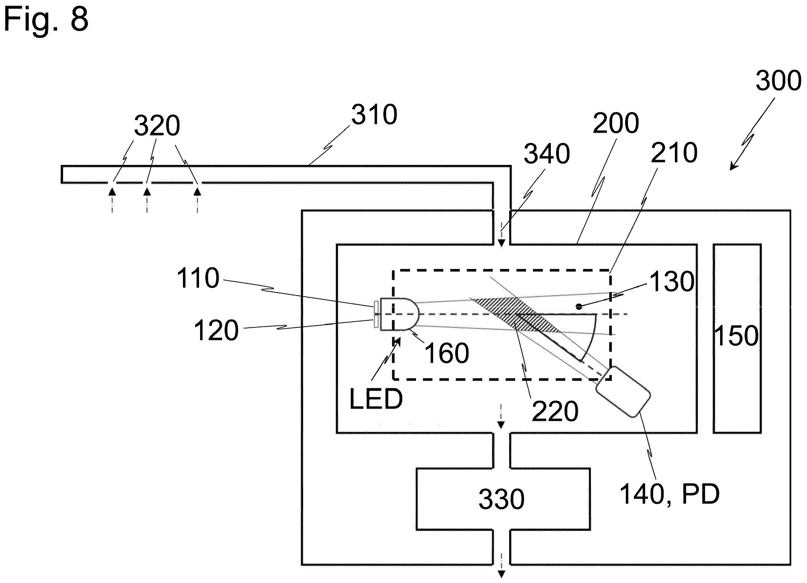

Die Figuren sind lediglich beispielhafter Natur und dienen nur dem Verständnis der Erfindung. Die gleichen Elemente sind in der Regel mit denselben Bezugszeichen versehen. Die Figuren 1 und 8 stellen jeweils schematische Schnitte dar. Selbstverständlich sind der gemeinsame Lichtpfad, der Einfallsbereich, der Detektionsbereich usw. nicht auf die darin gezeigte zweidimensionale Darstellung beschränkt, sondern liegen räumlich vor.

Die Figur 1 zeigt eine schematische Darstellung einer beispielhaften Ausführungsform einer erfindungsgemäßen Partikeldetektionseinheit 200. Die Partikeldetektionseinheit 200 weist eine Lichtquelle in Form einer Leuchtdiode LED und einen Lichtempfänger 140 der hier beispielhaft als Photodiode PD ausgebildet ist auf. Die Leuchtdiode LED umfasst zwei unmittelbar zueinander benachbart angeordnete und in derselben Ausstrahlrichtung ausgerichtete LED-Chips, einen ersten LED-Chip 110 und einen zweiten LED-Chip 120. Das von den LED-Chips 110, 120 jeweils ausgesendete Licht wird mittels einer, direkt vor den LED-Chips 110, 120 angeordneten Linse 160 gebündelt und durchläuft das Innere der Detektionskammer 210 der Partikeldetektionseinheit 200. Das von den beiden LED-Chips 110, 120 jeweils ausgesendete Licht überlagert einander, sodass im Innern der Detektionskammer 210 ein gemeinsamer Lichtpfad 130 definiert wird. Der Lichtempfänger 140 ist ebenfalls ins Innere der Detektionskammer 210 sowie auf den gemeinsamen Lichtpfad 130 gerichtet. Der Einfallsbereich 141 des Lichtempfängers 140 und der gemeinsame Lichtpfad 130 überschneiden einander und definieren so den in der Zeichnung schraffiert markierten Detektionsbereich 220.

Die in der Figur 1 dargestellte Partikeldetektionseinheit 200 ist beispielhaft als Streulichtdetektor zur Branderkennung ausgeführt. Zur Detektion von Partikeln, insbesondere Rauchpartikeln oder Aerosolen, findet zwischen der Detektionskammer 210 und dem zu überwachenden Bereich, dem sogenannten Überwachungsbereich, bspw. einem Raum eines Gebäudes, einer Lagerhalle oder ähnlichem, ein fluidischer Austausch statt. Letzterer ist hier anhand der gestrichelten Linien lediglich angedeutet, könnte in der Praxis aber durch einen kontinuierlichen Austausch zwischen der Detektionskammer und der im Überwachungsbereich befindlichen Umgebungsluft erfolgen, indem die Partikeldetektionseinheit als Deckenrauchmelder im Überwachungsbereich selbst angeordnet ist oder aber durch ein in der Figur 8 näher dargestelltes Ansaugpartikelerkennungssystem 300. Auf diese Weise können im Überwachungsbereich befindliche Partikel in den Detektionsbereich 220 gelangen und führen dort zu einer Streuung des von den LED-Chips 110, 120 entlang des gemeinsamen Lichtpfads 130 ausgesendeten Lichts. Zum Erfassen des in einem bestimmten Winkelbereich gestreuten Lichtanteils ist der Lichtempfänger 140 außerhalb des gemeinsamen Lichtpfads 130 angeordnet und die jeweiligen optischen Achsen 170 der Leuchtdiode LED und des Lichtempfängers 140 schließen miteinander den sogenannten Streulichtwinkel α ein.

Zur Partikeldetektion wird bspw. der erste LED-Chip 110 von einem Steuerungsmodul 150 zum Aussenden von Licht für eine festgelegte, erste Betriebsdauer t₁ angesteuert und in einem Partikeldetektionsmodus betrieben. Sofern sich Partikel, insbesondere Rauchpartikel oder Aeorosole im Detektionsbereich 220 befinden, kann an diesen gestreutes Streulicht vom Lichtempfänger 140 erfasst und ein entsprechendes Signal an das Steuerungsmodul 150 geleitet werden. Zur Überwachung des ersten LED-Chips 110 wird dann der zweite LED-Chip 120 von dem Steuerungsmodul 150 ebenfalls zum Aussenden von Licht angesteuert, allerdings für eine von der ersten Betriebsdauer t₁ abweichende, festgelegte zweite Betriebsdauer t₂ und in einem Überwachungsmodus betrieben. Der Lichtempfänger 140 kann innerhalb der Detektionskammer 210, bspw. an den Kammerinnenwandungen oder sonstigen Bauteilen gestreutes oder reflektiertes Licht, einen sogenannten Hintergrundstreulichtanteil empfangen, ohne dass sich Partikel im Detektionsbereich 220 befinden, und leitet ein entsprechendes Signal an das Steuerungsmodul 150 weiter. Anhand des Signals kann die jeweilige Lichtintensität I₁ bzw. I₂ des ersten und/oder des zweiten LED-Chips 110, 120 bestimmt werden. Das Steuerungsmodul 150 ist hierzu mit dem ersten und dem zweiten LED-Chip 110, 120 sowie mit dem Lichtempfänger 140 signalübertragend verbunden (nicht dargestellt). Anhand der jeweiligen Lichtintensitäten I₁, I₂ ermittelt das Steuerungsmodul 150 die betriebsdauerabhängige Lichtintensitätsabnahme des ersten und/oder des zweiten LED-Chips 110, 120.

Den nachfolgenden Beschreibungsabsätzen sowie den zugehörigen Figuren wird der Einfachheit halber jeweils die Ausführungsvariante zugrunde gelegt, bei welcher der zweite LED-Chip 120 zur Überwachung des ersten LED-Chips 110 mit einer zweiten Betriebsdauer t₂ betrieben wird, die kürzer ist als die erste Betriebsdauer t₁. Dies ist selbstverständlich rein beispielhaft zu verstehen und schränkt den Gegenstand der vorliegenden Anmeldung und der nachfolgenden Beschreibungsabsätze nicht auf eine derartige Ausführung ein. Ebenso sind konkret angegebene Werte für die Betriebsdauern t₁, t₂, die Pulsdauer tₚ, das Zeitintervall t_{d} oder die Ruhezeit tf beispielhafter Natur.

Beispielhafte Werte für die Betriebsdauern t₁, t₂ sind nämlich der tabellarischen Darstellung gemäß Figur 2 zu entnehmen. Die LED-Chips 110, 120 werden vorzugsweise gepulst betrieben, die jeweiligen Betriebsdauern t₁, t₂ ergeben sich dann aus der Addition der einzelnen Pulsdauern tₚ und sind für einen Zeitraum von 24 Stunden (1 Tag) angegeben. Eine typische Pulsdauer tₚ beträgt bspw. 4ms, zwischen den einzelnen Pulsen liegt ein Zeitabstand t_{d} von üblicherweise 200ms. Innerhalb des Zeitabstands kann bspw. ein zur Strom- und/oder Spannungsversorgung beider LED-Chips 110, 120 vorgesehener Kondensator geladen werden. Der erste LED-Chip 110 wird hier im Partikeldetektionsmodus zur kontinuierlichen Partikeldetektion betrieben, die Betriebsdauer t₁ über einen Zeitraum von 24h kann bspw. 1728s betragen. Die Frequenz und Dauer der Pulse kann konstant sein oder insbesondere zum Temperaturausgleich oder zur Anpassung der Detektionssensibilität variieren. Der zweite LED-Chip 120 wird im Überwachungsmodus zur Überwachung des ersten LED-Chips 110 mit einer abweichenden, wesentlich kürzeren Betriebsdauer t₂, die bspw. in einem Bereich zwischen 11,52s und 24ms pro 24h liegt. Durch eine derart kurze Betriebsdauer t₂ wird die betriebsdauerabhängige Lichtintensitätsabnahme des zweiten LED-Chips 120 vernachlässigbar klein. Der Betrieb des zweiten LED-Chips 120 erfolgt durch eine kurze Pulsfolge, die einen oder mehrere Pulse umfasst. Vom Beginn der Pulsfolge bis zum Beginn der nächsten Pulsfolge vergeht eine Ruhezeit tf, die in einem Bereich zwischen 30s bis 24h liegt. Das Verhältnis der ersten Betriebsdauer t₁ zur zweiten Betriebsdauer t₂ kann in einem Bereich zwischen 150 bis 72000 liegen.

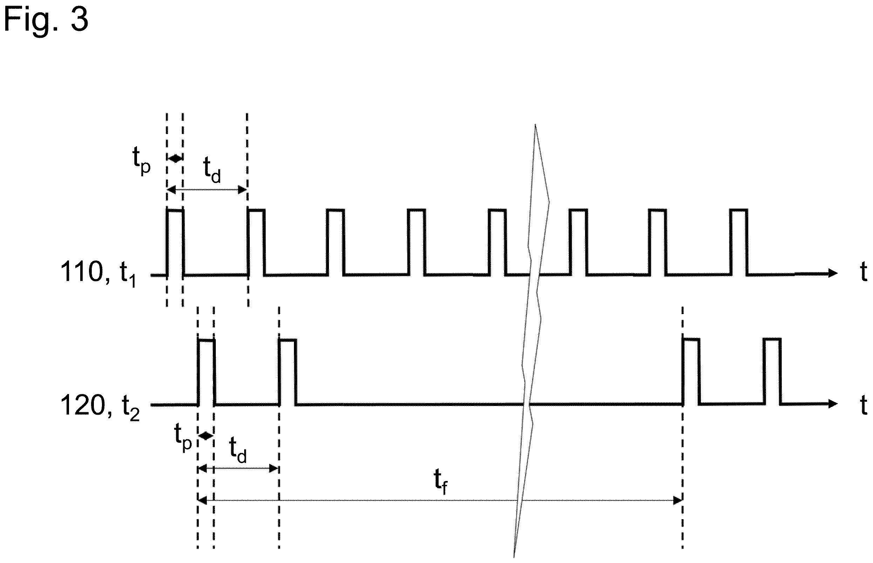

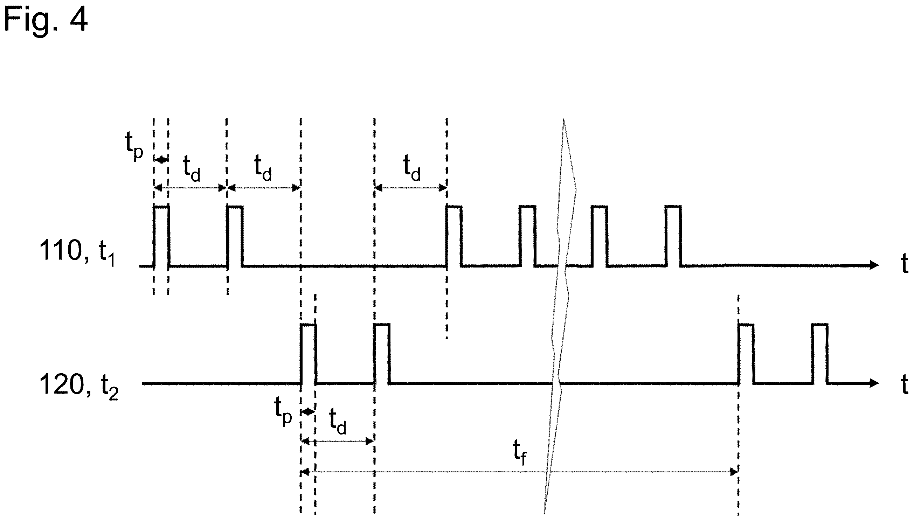

In den Figuren 3 und 4 sind jeweilige Beispiele für den Betrieb des ersten und des zweiten LED-Chips 110, 120 anhand jeweiliger Zeitstrahlen t veranschaulicht. Dargestellt sind die jeweiligen Pulsdauern tₚ, die dazwischenliegenden Zeitabstände t_{d} sowie die zwischen den Pulsfolgen des zweiten LED-Chips 120 liegende Ruhezeit tf. Aufgrund der langen Betriebszeiten von Partikeldetektionseinheiten 200 sind die Zeitstrahlen t jeweils unterbrochen dargestellt.

Gemäß dem Beispiel aus Figur 3 setzt sich die Betriebsdauer t₁ des ersten LED-Chips 110 zur Partikeldetektion aus in einem regelmäßigen Intervall wiederkehrenden Pulsen der jeweiligen Pulsdauer tₚ zusammen. Zwischen den einzelnen Pulsen liegt hier stets derselbe Zeitabstand t_{d}. Die Betriebsdauer t₂ des zweiten LED-Chips 120 setzt sich aus in regelmäßigen Abständen wiederkehrende Pulsfolgen, hier beispielhaft zwei Pulse mit jeweiliger Pulsdauer tₚ, zusammen. Zwischen den beiden Pulsen einer Pulsfolge liegt der Zeitabstand t_{d}. Vom Beginn der Pulsfolge bis zum Beginn der nächsten Pulsfolge vergeht jeweils die Ruhezeit t_{f}. Zu erkennen ist, dass die Pulse des ersten und des zweiten LED-Chips 110, 120 nie gleichzeitig erfolgen. Dies erleichtert bzw. verbessert die Erfassung der jeweiligen Lichtintensität mittels der Phototdiode.

Im Bespiel gemäß der Figur 4 wird, abweichend zum vorherigen Beispiel, der Betrieb des ersten LED-Chips 110 für die Pulsfolge des zweiten LED-Chips 120 kurzzeitig unterbrochen, sodass zwischen jedem einzelnen Lichtpuls, unabhängig davon, ob dieser vom ersten oder vom zweiten LED-Chip 110, 120 stammt, mindestens der Zeitabstand t_{d} liegt. Ein solcher Ablauf ermöglicht die Verwendung eines einzigen, gemeinsamen Kondensators zur Versorgung beider LED-Chips 110, 120, da zwischen den einzelnen Pulsen jeweils ausreichend Zeit zur Aufladung des Kondensators verbleibt.

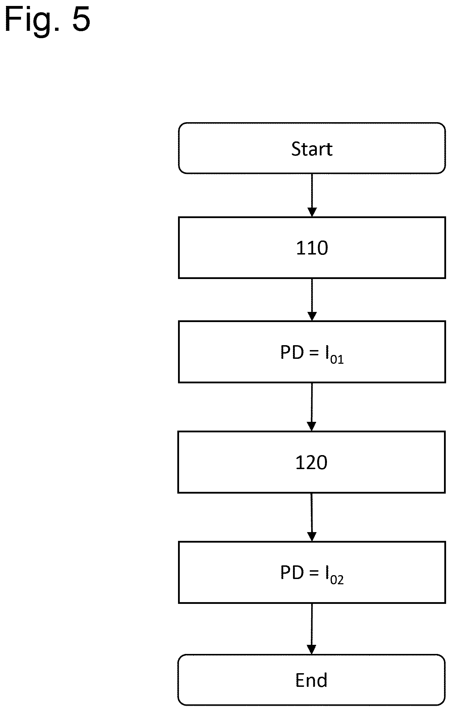

Ein Ablaufschema eines optionalen Kalibrierungsprozesses zur Ermittlung jeweiliger Anfangs-Lichtintensitäten I₀₁, I₀₂ des ersten und des zweiten LED-Chips 110, 120 ist in der Figur 5 gezeigt. Demnach werden die LED-Chips 110, 120, nacheinander zum Aussenden von Licht betrieben und mittels der Photodiode PD deren jeweilige Anfangs-Lichtintensität I₀₁, I₀₂ erfasst. Im vorliegenden Beispiel wird zunächst der erste LED-Chip 110 zum Aussenden von Licht, vorzugsweise durch einen Lichtpuls oder eine kurze Pulsfolge, betrieben. Zumindest ein Teil des ausgesendeten Lichts wird durch die Photodiode PD erfasst und anhand dessen die Anfangs-Lichtintensität I₀₁ bestimmt. Diese kann dann auf dem Steuerungsmodul 150, insbesondere auf einer Speichereinheit des Steuerungsmoduls 150 hinterlegt werden. Die Bestimmung der Anfangs-Lichtintensität I₀₂ des zweiten LED-Chips 120 erfolgt im Anschluss entsprechend und kann ebenfalls auf der Speichereinheit des Steuerungsmoduls 150 hinterlegt werden. Die beiden Anfangs-Lichtintensitäten I₀₁, I₀₂ können dann zueinander ins Verhältnis gesetzt werden und als Referenzwert I₀₁/I₀₂ zur Bewertung der betriebsdauerabhängigen Lichtintensitätsabnahme herangezogen werden.

Der Kalibrierungsprozess wird vorzugsweise vor Inbetriebnahme der Partikeldetektionseinheit 200 durchgeführt. Damit die Messung der Anfangs-Lichtintensitäten I₀₁, I₀₂ beider LED-Chips 110, 120 jeweils unter denselben Randbedingungen erfolgen kann, ist es zweckmäßig, den Kalibrierungsprozess mit der bereits fertig gestellten Partikeldetektionseinheit 220, nämlich in deren Detektionskammer 210 durchzuführen. Auf diese Weise sind nicht nur die Randbedingungen für beide LED-Chips 110, 120 identisch, sondern entsprechen auch den im späteren Überwachungsverfahren vorliegenden Randbedingungen. Vorteilhaft wird der Kalibrierungsprozess in einer Partikeldetektionseinheit 200 mit Streulichtaufbau durchgeführt. Der von der Photodiode PD empfangene Lichtanteil ist dann ein Hintergrundstreulichtanteil.

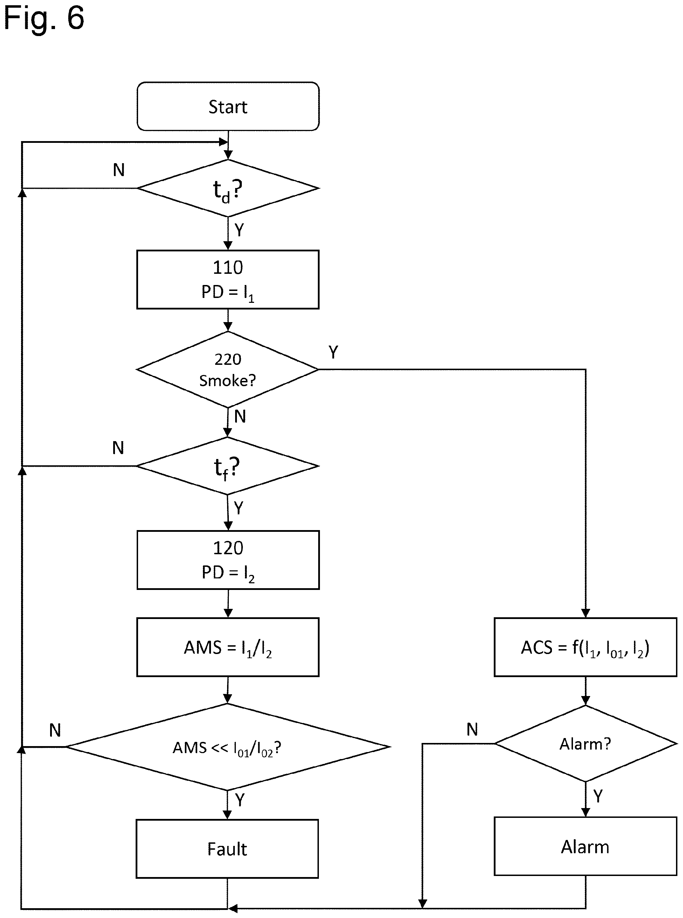

Der Figur 6 kann ein Ablaufschema einer ersten beispielhaften Variante eines erfindungsgemäßen Überwachungsverfahrens entnommen werden. Mit Inbetriebnahme der Partikeldetektionseinheit 200 wird zunächst der erste LED-Chip 110 im Partikeldetektionsmodus betrieben und der zweite LED-Chip 120 im Überwachungsmodus. Nach Ablauf des Zeitabstands t_{d} (t_{d} = Y) wird der erste LED-Chip 110 zum Senden von Licht, insbesondere eines Lichtpulses mit der Pulsdauer tₚ, betrieben. Das ausgesendete Licht wird von einem Lichtempfänger, insbesondere einer Photodiode PD erfasst. Im Beispiel der hier beschriebenen Streulichtkonfiguration eines Streulichtdetektors wird lediglich ein im Innern der Detektionskammer 210 gestreuter und/oder reflektierter, vergleichsweise kleiner Anteil des ausgesendeten Lichts, ein sogenannter Hintergrundstreulichtanteil, erfasst. Anhand des erfassten Hintergrundstreulichtanteils wird die derzeitige Lichtintensität I₁ des ersten LED-Chips 110 bestimmt. Dies kann bspw. mittels des Steuerungsmoduls 150 erfolgen, wobei ein von der Photodiode PD erzeugtes Hintergrundstreulichtsignal, anhand dessen dann die Lichtintensität I₁ bestimmt werden kann, an das Steuerungsmodul 150 geleitet wird. Die Lichtintensität I₁ wird auf einer Speichereinheit des Steuerungsmoduls 150 hinterlegt. Solange keine Partikel, bspw. in Form von Rauch im Detektionsbereich 220 erkannt werden (Smoke = N) und die festgelegte Ruhezeit t_{f} noch nicht erreicht wurde (t_{f} = N), wiederholen sich die beschriebenen Schritte zum gepulsten Betrieb des ersten LED-Chips 110 und zur jeweiligen Bestimmung der Lichtintensität I₁.

Mit Ablauf der vorgegebenen Ruhezeit tf (tf = Y) wird dann der zweite LED-Chip 120 zum Aussenden von Licht betrieben, dies kann insbesondere durch einen Lichtpuls oder eine kurze Pulsfolge erfolgen. Die Pulsfolge des zweiten LED-Chips 120 kann bspw. alternierend zu den jeweiligen Pulsen des ersten LED-Chips erfolgen, ohne dass dessen Betrieb unterbrochen werden müsste (s. auch Figur 3). Die Photodiode PD erfasst entsprechend den Hintergrundstreulichtanteil des vom zweiten LED-Chip 120 ausgesendeten Lichts. Anhand des erfassten Lichts wird wiederum die derzeitige Lichtintensität I₂ des zweiten LED-Chips 120, insbesondere mittels des Steuerungsmoduls 150 ermittelt. Mittels des Steuerungsmoduls 150 wird auch ein Verhältnis I₁/I₂ der jeweiligen Lichtintensitäten zueinander gebildet und anhand dieses Verhältnisses I₁/I₂ ein sogenanntes Alterungsüberwachungssignal (Aging Monitoring Signal) AMS erhalten. Das Alterungsüberwachungssignal AMS ist proportional zur betriebsdauerabhängigen Lichtintensitätsabnahme des ersten LED-Chips 110. Zur Bewertung der Funktionsfähigkeit der Partikeldetektionseinheit 200 ist es grundsätzlich denkbar, das aktuell erhaltene Alterungsüberwachungssignal AMS mit dem jeweils zuvor erhaltenen Alterungsüberwachungssignal AMS zu vergleichen. Besonders vorteilhaft ist es jedoch, die Bewertung anhand eines in einem optionalen Kalibrierungsprozesses (s. Figur 5) zuvor bestimmten Referenzwert I₀₁/I₀₂ der Anfangs-Lichtintensitäten I₀₁, I₀₂ vorzunehmen. Sofern das Alterungsüberwachungssignal AMS gegenüber dem Referenzwert I₀₁/I₀₂ um einen vorab festgelegten Wert, bspw. um 40 %, gesunken ist, d. h. die betriebsdauerabhängige Lichtintensitätsabnahme einen vorab festgelegten Grenzwert überschritten hat (AMS « I₀₁/I₀₂ = Y), wird eine Fehler- oder Warnmeldung "FAULT" ausgegeben. Als weitere Maßnahme könnte bspw. der erste LED-Chip 110 ersetzt werden, oder aber der jeweilige Betriebsmodus der LED-Chips 110, 120 wird umgekehrt, wobei dann der erste LED-Chip 110 im Überwachungsmodus und der zweite LED-Chip 120 im Partikeldetektionsmodus betrieben wird. Sofern der vorab festgelegte Grenzwert (AMS « I₀₁/I₀₂ = N) nicht erreicht ist, beginnt der Ablauf von vorne.

Für den Fall, dass die Photodiode PD an im Detektionsbereich 220 befindlichen Partikeln, bspw. Rauchpartikeln, gestreutes Streulicht erfasst (Smoke = Y), führt dies zu einem Anstieg der Lichtintensität I₁ und wird als Streulichtsignal an das Steuerungsmodul 150 weitergeleitet. Gleichzeitig wird das Verfahren zur Überwachung der betriebsdauerabhängigen Lichtintensitätsabnahme ausgesetzt. Durch das Steuerungsmodul 150 wird eine Auswertung des erfassten Streulichtsignals durchgeführt. Der Auswertung kann nach einer optionalen Verfahrensvariante eine auf dem Alterungsüberwachungssignal AMS beruhende Alterungskompensation zugrunde gelegt werden, und so ein alterungskompensiertes Streulichtsignal ACS berechnet werden. Anhand des Streulichtsignals oder des alterungskompensierten Streulichtsignals ACS wird geprüft, ob vorgegebene Alarmbedingungen erfüllt sind. Sofern bspw. das alterungskompensierte Streulichtsignal ACS eine vorgegebene Alarmschwelle überschritten hat (Alarm = Y) wird ein Alarm, insbesondere ein Brandalarm ausgegeben. Sind die Bedingungen nicht erfüllt bzw. wird die Schwelle nicht überschritten (Alarm = N), so wird das Überwachungsverfahren fortgeführt.

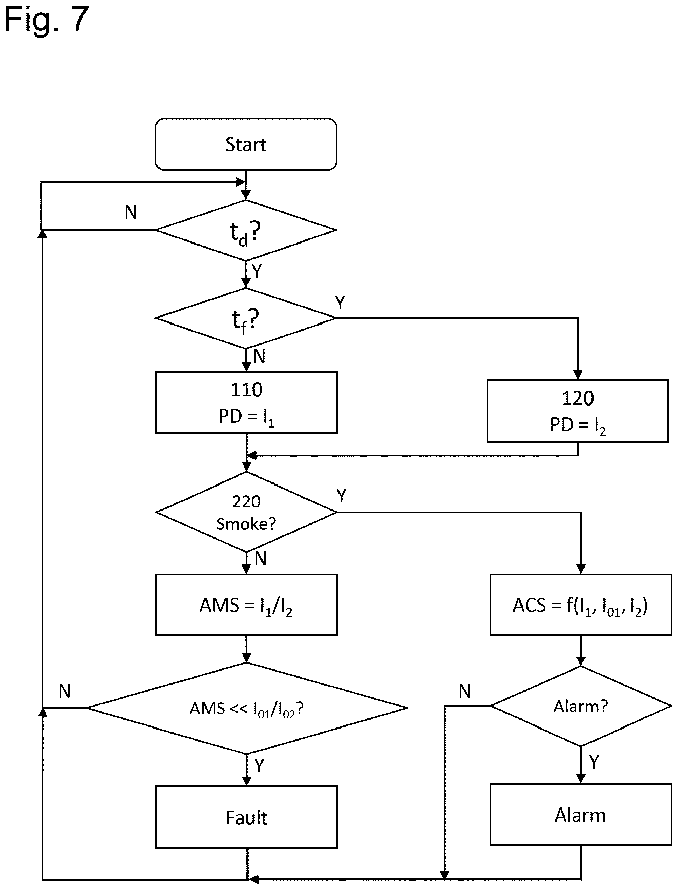

Ein alternatives Ablaufschema einer zweiten beispielhaften Variante des erfindungsgemäßen Überwachungsverfahrens ist in der Figur 7 gezeigt. Die zweite Variante entspricht in einigen Schritten der ersten Variante, diese Schritte werden nicht nochmals in aller Ausführlichkeit wiederholt. Abweichend zur ersten Variante kann der Betrieb des ersten LED-Chips 110 für die Pulsfolge des zweiten LED-Chips 120 unterbrochen werden (s. auch Figur 4). Der erste LED-Chip 110 wird immer dann zum Aussenden von Licht, insbesondere eines Lichtpulses betrieben, sofern der Zeitabstand t_{d} abgelaufen ist (t_{d} = Y), die Ruhezeit tf jedoch noch nicht erreicht wurde (t_{f} = N). Der zweite LED-Chip 120 wird immer dann zum Aussenden von Licht betrieben, vorzugsweise durch eine kurze Pulsfolge, wenn sowohl der Zeitabstand t_{d} (t_{d} = Y), als auch die Ruhezeit tf (tf = Y) abgelaufen sind. Mittels der Photodiode PD und dem Steuerungsmodul 150 werden die jeweiligen Lichtintensitäten I₁, I₂ ermittelt und gespeichert.

Solange keine Partikel, insbesondere Rauchpartikel im Detektionsbereich 220 erkannt werden (Smoke = N), wird, entsprechend der zuvor beschriebenen, ersten Variante das Alterungsüberwachungssignal AMS gebildet und anhand dessen die Bewertung der Funktionsfähigkeit der Partikeldetektionseinheit 200 vorgenommen. Bei positivem Ergebnis (AMS « I₀₁/I₀₂ = N) wird das Überwachungsverfahren fortgesetzt, bei negativem Ergebnis (AMS « I₀₁/I₀₂ = N) wird eine Fehler- oder Warnmeldung "FAULT" ausgegeben und gegebenenfalls der Betriebsmodus des ersten und des zweiten LED-Chips 110, 120 umgekehrt.

Sofern Partikel, insbesondere Rauchpartikel im Detektionsbereich 220 erkannt werden (Smoke = Y), wird wiederum entsprechend der zuvor beschriebenen ersten Variante das Überwachungsverfahren unterbrochen und eine Auswertung des ggf. alterungskompensierten Streulichtsignals vorgenommen. Abhängig vom Ergebnis der Auswertung wird entweder ein Alarm, insbesondere Brandalarm ausgeben (Alarm = Y) oder das Verfahren zur Überwachung fortgesetzt (Alarm = N).

In der Figur 8 ist schließlich eine schematische Darstellung einer beispielhaften Partikeldetektionseinheit 200 gezeigt, die Bestandteil eines Ansaugpartikelerkennungssystems 300 ist. Das Ansaugpartikelerkennungssystem 300 umfasst mindestens eine Rohr- und/oder Schlauchleitung 310, die über eine oder mehrere Ansaugöffnungen 320 zur jeweiligen Entnahme einer Fluidprobe in einen oder mehrere Überwachungsbereiche mündet. Bei einem Überwachungsbereich handelt es sich bspw. um einen Raum eines Gebäudes oder Beförderungsmittels, eine Lagerhalle oder ähnliches. Durch ein Strömungsmittel 330, insbesondere einen Lüfter, kann innerhalb der Rohr- und/oder Schlauchleitung 310 eine Fluidströmung in Richtung der Partikeldetektionseinheit 200 erzeugt werden, die entlang eines Strömungspfads 340 die Detektionskammer 220 durchströmt. Die Partikeldetektionseinheit 200 entspricht in ihrem Aufbau der in der Figur 1 gezeigten beispielhaften Ausführung und umfasst eine Leuchtdiode LED mit zwei LED-Chips 110, 120 und einer Linse 160, einen Lichtempfänger 140, insbesondere eine Photodiode PD, ein Steuerungsmodul 150 und eine Detektionskammer 210. Die Linse 160 bündelt das von den LED-Chips 110, 120 jeweils ausgesendete Licht und erzeugt einen gemeinsame Lichtpfad 130. Die LED-Chips 110, 120 und die Linse 160 sind dabei so ausgerichtet, dass der gemeinsame Lichtpfad 130 das Innere der der Detektionskammer 210 durchquert und gleichzeitig auf den Strömungspfad 340 gerichtet ist. Die Photodiode PD ist auf den gemeinsamen Lichtpfad 130 gerichtet und definiert so, vorzugsweise im Bereich des Strömungspfads 340, den Detektionsbereich 220.

### Bezugszeichenliste

- 110: erster LED-Chip
- 120: zweiter LED-Chip
- 130: gemeinsamer Lichtpfad
- 140: Lichtempfänger
- 141: Einfallsbereich
- 150: Steuerungsmodul
- 160: Linse
- 170: optische Achse

- 200: Partikeldetektionseinheit
- 210: Detektionskammer
- 220: Detektionsbereich

- 300: Ansaugpartikelerkennungssystem
- 310: Rohr- und/oder Schlauchleitung
- 320: Ansaugöffnung
- 330: Strömungsmittel
- 340: Strömungspfad

- ACS: alterungskompensiertes Streulichtsignal
- AMS: Alterungsüberwachungssignal
- Fault: Fehler
- I₁: Lichtintensität des ersten LED-Chips
- I₂: Lichtintensität des zweiten LED-Chips
- LED: Leuchtdiode
- PD: Photodiode
- Smoke: Rauch

- Y: Ja
- N: Nein

- t: Zeitstrahl
- t₁: erste Betriebsdauer
- t₂: zweite Betriebsdauer
- tₚ: Pulsdauer
- t_{d}: Zeitabstand
- t_{f}: Ruhezeit

- α: Streulichtwinkel

## Patentansprüche

1. Verfahren zur Überwachung der betriebsdauerabhängigen Lichtintensitätsabnahme eines LED-Chips (110, 120) für eine Partikeldetektionseinheit (200), wobei
- ein erster LED-Chip (110) und ein zweiter LED-Chip (120) als Leuchtdiode (LED) zum Aussenden von Licht konfiguriert und derart ausgerichtet sind, dass das jeweils ausgesendete Licht einen gemeinsamen Lichtpfad (130) definierend einander zumindest teilweise überlagert, und
- ein Lichtempfänger (140), insbesondere eine Photodiode (PD) zum direkten oder indirekten Empfangen von zumindest einem Teil des von den LED-Chips (110, 120) ausgesendeten Lichts konfiguriert ist,
**dadurch gekennzeichnet, dass**
- der erste LED-Chip (110) für eine festgelegte, erste Betriebsdauer (t₁) zum Aussenden von Licht betrieben wird,
- der zweite LED-Chip (120) für eine festgelegte, von der ersten Betriebsdauer (t₁) abweichende zweite Betriebsdauer (t₂) zum Aussenden von Licht betrieben wird,
- von dem Lichtempfänger (140) das von dem ersten LED-Chip (110) sowie das von dem zweiten LED-Chip (120) ausgesendete Licht zumindest teilweise erfasst und die jeweilige Lichtintensität (I₁, I₂) ermittelt wird, und
- anhand der Lichtintensitäten (I₁, I₂) die betriebsdauerabhängige Lichtintensitätsabnahme des ersten LED-Chips (110) und/oder des zweiten LED-Chips (120) ermittelt wird.

2. Überwachungsverfahren nach Anspruch 1,
**dadurch gekennzeichnet, dass**
anhand der betriebsdauerabhängigen Lichtintensitätsabnahme des ersten LED-Chips (110) und/oder des zweiten LED-Chips (120) die Funktionsfähigkeit der Partikeldetektionseinheit (200) bewertet wird.

3. Überwachungsverfahren nach Anspruch 2,
**dadurch gekennzeichnet, dass**
eine Anfangs-Lichtintensität (I₀₁, I₀₂) jeweils des ersten und des zweiten LED-Chips (110, 120), insbesondere die Relation der Anfangs-Lichtintensitäten (I₀₁, I₀₂) zueinander, ermittelt wird und die ermittelten Anfangs-Lichtintensitäten (I₀₁, I₀₂) der Bewertung der Funktionsfähigkeit der Partikeldetektionseinheit (200) zugrunde gelegt werden.

4. Überwachungsverfahren nach einem der vorhergehenden Ansprüche,
**dadurch gekennzeichnet, dass**
der erste LED-Chip (110) zur Partikeldetektion verwendet wird und der zweite LED-Chip (120) zur Überwachung der betriebsdauerabhängigen Lichtintensitätsabnahme des ersten LED-Chips (120), wobei die erste Betriebsdauer (t₁) des ersten LED-Chips (110) einem Vielfachen der zweiten Betriebsdauer (t₂) des zweiten LED-Chips (120) entspricht.

5. Überwachungsverfahren nach Anspruch 4,
**dadurch gekennzeichnet, dass**
nachdem ein vorab festgelegter Wert oder Grenzwert der betriebsdauerabhängigen Lichtintensitätsabnahme des ersten LED-Chips (110) erreicht oder überschritten wurde, der erste und der zweite LED-Chip (110, 120) derart umgekehrt betrieben werden, dass die zweite Betriebsdauer (t₂) des zweiten LED-Chips (120) einem Vielfachen der ersten Betriebsdauer (t₁) des ersten LED-Chips (110) entspricht.

6. Überwachungsverfahren nach einem der vorhergehenden Ansprüche,
**dadurch gekennzeichnet, dass**
der erste und der zweite LED-Chip (110, 120) alternierend, zu voneinander abweichenden Zeiten zum Aussenden von Licht betrieben werden.

7. Überwachungsverfahren nach einem der vorhergehenden Ansprüche,
**dadurch gekennzeichnet, dass**
die betriebsdauerabhängige Lichtintensitätsabnahme mehrerer erster LED-Chips (110) durch mindestens einen zweiten LED-Chip (120) überwacht wird.

8. Überwachungsverfahren nach Anspruch 7,
**dadurch gekennzeichnet, dass**
die mehreren ersten LED-Chips (110) jeweils Licht mit voneinander abweichender Wellenlänge, insbesondere rotes, infrarotes, grünes oder blaues Licht aussenden und der mindestens eine zweite LED-Chip (120) Licht mit derselben Wellenlänge eines der ersten LED-Chips (110), insbesondere blaues Licht, aussendet.

9. Überwachungsverfahren nach einem der vorhergehenden Ansprüche,
**dadurch gekennzeichnet, dass**
der eine oder mehrere erste LED-Chips (110) sowie der zweite LED-Chip (120) und der Lichtempfänger (140) signalübertragend mit einem Steuerungsmodul (150) verbunden sind, welches Steuerungsmodul (150) den einen oder mehrere erste LED-Chips (110) sowie den zweiten LED-Chip (120) ansteuert, anhand des von dem Lichtempfänger (140) erfassten Lichts die jeweiligen Lichtintensitäten (I₁, I₂) des ersten und des zweiten LED-Chips (110, 120) ermittelt und anhand der Lichtintensitäten (I₁, I₂) die betriebsdauerabhängige Lichtintensitätsabnahme ermittelt.

10. Partikeldetektionseinheit (200) mit einem ersten LED-Chip (110) zum Aussenden von Licht entlang eines Lichtpfads, einem Lichtempfänger (140), insbesondere einer Photodiode (PD), zum Erfassen von zumindest einem Teil des von dem ersten LED-Chip (110) ausgesendeten Lichts und einem signalübertragend mit dem ersten LED-Chip (110) und dem Lichtempfänger (140) verbundenen Steuerungsmodul (150), wobei der Lichtempfänger (140) einen Detektionsbereich (220) innerhalb einer Detektionskammer (210) der Partikeldetektionseinheit (200) definierend auf den Lichtpfad ausgerichtet ist und das Steuerungsmodul (150) zur Erkennung und Auswertung von im Detektionsbereich (220) befindlichen Partikeln anhand des von dem Lichtempfänger (140) empfangenen Lichts konfiguriert ist,
**dadurch gekennzeichnet, dass**
ein zweiter LED-Chip (120) mit dem Steuerungsmodul (150) signalübertragend verbunden ist, wobei der erste und der zweite LED-Chip (110, 120) zum Aussenden von Licht konfiguriert und derart ausgerichtet sind, dass das jeweils ausgesendete Licht einen gemeinsamen Lichtpfad (130) innerhalb der Detektionskammer (210) definierend einander zumindest teilweise überlagert, und wobei der Lichtempfänger (140) den Detektionsbereich (220) definierend auf den gemeinsamen Lichtpfad (130) ausgerichtet ist.

11. Partikeldetektionseinheit nach Anspruch 10,
**dadurch gekennzeichnet, dass**
das Steuerungsmodul (150) dazu ausgebildet ist,
- den ersten LED-Chip (110) zum Aussenden von Licht für eine erste Betriebsdauer (t₁) anzusteuern,
- den zweiten LED-Chip (120) zum Aussenden von Licht für eine, von der ersten Betriebsdauer (t₁) abweichende zweite Betriebsdauer (t₂) anzusteuern,
- anhand des von dem Lichtempfänger (140) erfassten Lichts jeweilige Lichtintensitäten (I₁, I₂) des ersten und des zweiten LED-Chips (110, 120) zu ermitteln, und
- anhand der Lichtintensitäten (I₁, I₂) die betriebsdauerabhängige Lichtintensitätsabnahme (AMD) des ersten LED-Chips (110) und/oder des zweiten LED-Chips (120) zu ermitteln.

12. Partikeldetektionseinheit nach einem der Ansprüche 10 oder 11,
**dadurch gekennzeichnet, dass**
das Steuerungsmodul (150) eine Speichereinheit zum Speichern jeweils ermittelter Lichtintensitäten (I₁, I₂) umfasst und, dass eine jeweilige Anfangs-Lichtintensität (I₀₁, I₀₂) des ersten und des zweiten LED-Chips (110, 120), insbesondere die Relation der Anfangs-Lichtintensitäten (I₀₁, I₀₂) zueinander auf der Speichereinheit hinterlegt ist.

13. Partikeldetektionseinheit (200) nach einem der Ansprüche 10 bis 12,
**dadurch gekennzeichnet, dass**
der erste und der zweite LED-Chip (110, 120) unmittelbar zueinander benachbart auf einer gemeinsamen Grundplatte angeordnet sind und deren jeweils ausgesendetes Licht mittels einer Linse (160) entlang einer gemeinsamen optischen Achse (170) gerichtet und/oder gebündelt ist.

14. Partikeldetektionseinheit (200) nach einem der Ansprüche 10 bis 13,
**dadurch gekennzeichnet, dass**
der erste und der zweite LED-Chip (110, 120) mit einer gemeinsamen Strom- und/oder Spannungsquelle, insbesondere mit einem gemeinsamen Kondensator energieübertragend verbunden sind.

15. Partikeldetektionseinheit (200) nach einem der Ansprüche 10 bis 14,
**dadurch gekennzeichnet, dass**
die Partikeldetektionseinheit (200) als Streulichtdetektor konzipiert ist, wobei der Lichtempfänger (140) zum indirekten Empfangen eines Teils des von den LED-Chips (110, 120) gesendeten Lichts außerhalb des gemeinsamen Lichtpfads (130) angeordnet und auf diesen ausgerichtet ist.

16. Partikeldetektionseinheit (200) nach einem der Ansprüche 10 bis 15,
**dadurch gekennzeichnet, dass**
die Partikeldetektionseinheit (200) Bestandteil eines Ansaugpartikelerkennungssystems (300) mit mindestens einer Rohr- und/oder Schlauchleitung (310), die über eine oder mehrere Ansaugöffnungen (320) zur jeweiligen Entnahme einer Fluidprobe in einen oder mehrere Überwachungsbereiche mündet, ist, wobei der gemeinsame Lichtpfad (130) auf einen von den Fluidproben durchströmbaren Strömungspfad (340) gerichtet ist.
